# EUROPÄISCHE PATENTSCHRIFT

(11) **EP 0 551 615 B1**
(45) Veröffentlichungstag und Bekanntmachung des Hinweises auf die Patenterteilung: **15.03.1995**
(21) Anmeldenummer: 92121057.1
(22) Anmeldetag: 10.12.1992
(51) Int. Cl.: B64C 1/14, E05F 7/02

(54) **Öffnungsmechanik für Flugzeugtüren**
Opening mechanism for aircraft doors
Mécanisme d'ouverture pour portes d'avion

(30) Priorität: 16.01.1992 DE 4200930
(43) Veröffentlichungstag der Anmeldung: 21.07.1993
(73) Patentinhaber: Daimler-Benz Aerospace Airbus Gesellschaft mit beschränkter Haftung, 21129 Hamburg (DE)
(72) Erfinder: Kallies, Günter, W-2000 Hamburg 54 (DE); Lessat-Kaupat, Wolfgang, W-2104 Hamburg 92 (DE)
(74) Vertreter: Hansmann, Dierk, Dipl.-Ing.

(56) Entgegenhaltungen:
- GB-A- 1 551 821
- US-A- 4 262 447

## Beschreibung

Die Erfindung bezieht sich auf eine Öffnungsmechanik für Flugzeugtüren gemäß dem Gattungsbegriff des Anspruchs 1.

Solche Mechaniken sind in den verschiedensten und meist typenspezifischen Ausführungsformen bekannt. Bei einer druckbeaufschlagten Türkonzeption liegt - gemäß einem Ausführungsbeispiel der Anmelderin - die Türe an speziellen rumpf- und türseitigen Anlagebeschlägen auf und beim Öffnen der Türe wird diese über diese Anlagebeschläge hochgehoben und nach außen geschwenkt. Das bei allen Flugzeugtüren erforderliche Scharnier ist im Rumpf angeordnet und beeinträchtigt daher den Öffnungswinkel der Türe, besonders im Hinblick auf Kollidierungen mit dem Rumpf, den Flügeln etc.

Die GB-A-1 551 821 zeigt eine Öffnungsmechanik für eine druckbeaufschlagte Flugzeugtür, wobei diese Tür mittels zweier Gelenke mit dem Flugzeugrumpf verbunden ist. Jedes Gelenk besteht aus einem türseitigen und einem rumpfseitigen Teil, die über ein Scharnier verbunden sind. Beim öffnen der Tür werden die Gelenke nach außen und nach unten geschwenkt. Anschließend werden die türseitigen Teile der Gelenke zum Anheben der Tür um die Scharniere nach oben geschwenkt, und die Tür läßt sich danach um die Scharniere seitlich nach außen schwenken.

Der vorliegenden Erfindung liegt die Aufgabe zugrunde, eine Öffnungsmechanik der eingangs genannten Art zu schaffen, die es in einem Arbeitsgang ermöglicht, daß das Türöffnungsscharnier beim Öffnungsvorgang von einer rumpfseitigen Positionierung in eine außerbordseitige Position bringbar ist.

Diese Aufgabe wird durch die im Anspruch aufgezeigten Maßnahmen gelöst. In der nachfolgenden Beschreibung ist ein Ausführungsbeispiel erläutert und in den Figuren der Zeichnung dargestellt. Es zeigen:
- Fig. 1: einen Querschnitt durch eine Flugzeugtür in geschlossener und geöffneter Position,
- Fig. 1a: einen Teilquerschnitt gemäß Fig. 1 mit Darstellung der Anhebewelle in geschlossener Position,

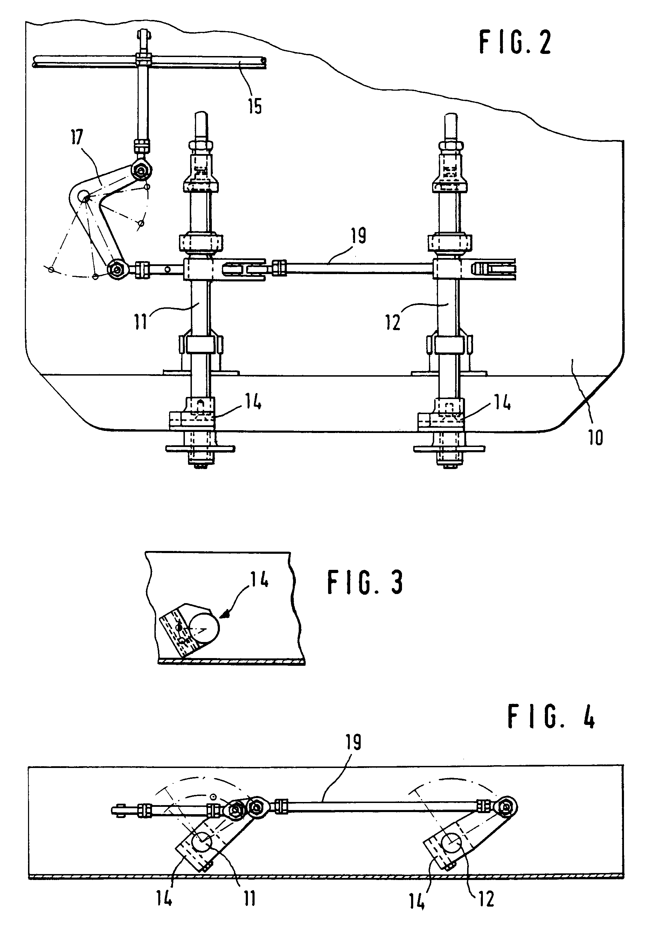

- Fig. 2: eine Frontansicht der Tür gemäß Fig. 1 ohne ihre Außenverkleidung im geschlossenen Zustand,
- Fig. 3: eine Darstellung der Position des Scharniers, wenn die Tür 19 mm angehoben ist,
- Fig. 4: eine Draufsicht auf das Gestänge gemäß Fig. 2 bei geschlossenem Türzustand.

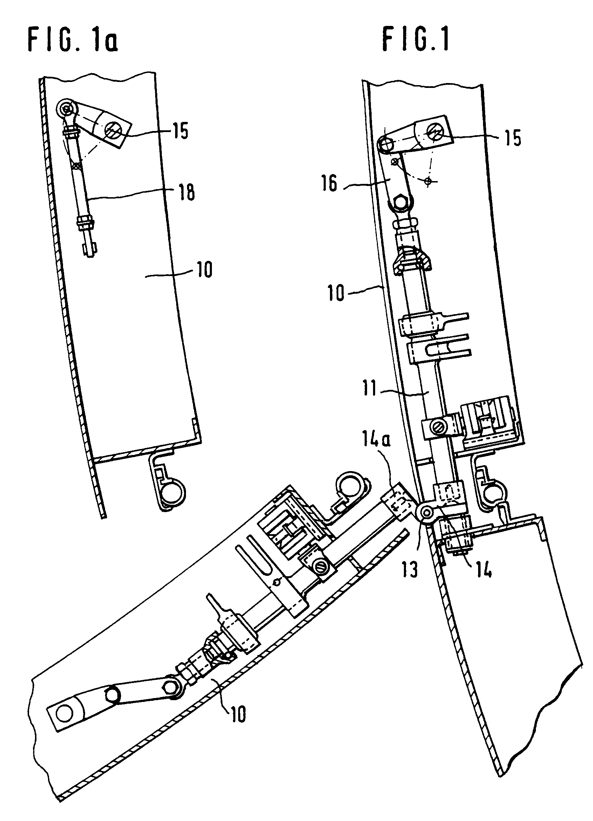

Wie in den Figuren 1 und 1a veranschaulicht ist, stützt sich die Flugzeugtür 10 zum Anheben auf zwei Anhebestangen 11, 12. Am rumpfseitigen Ende der Anhebestangen 11,12 befindet sich je ein Scharnier 14 mit einer Scharnierachse 13 um die die Tür nach unten - oder je nach Ausführungskonzeption nach oben - geöffnet werden kann. Im letzteren Fall ist die gesamte Konstruktion um 180° versetzt angeordnet.

Um nun die Scharniere 14 in eine Außerbordposition zu bringen, sind die Anhebestangen 11,12 um ihre Längsachsen drehbar gelagert. Das Abstützen der Tür 10 auf den Anhebestangen 11,12 - und damit deren Anhebung - erfolgt durch Drehen der Anhebewelle 15 und über einen Hebel 16. Gleichzeitig werden durch die Drehbewegung der Anhebewelle 15 über eine Verbindungsstange 18 und einen Umlenkhebel 17 die Anhebestangen 11,12 um ihre Längsachse gedreht und so die Scharniere 14 um 90° nach außen geschwenkt. Die nun außen liegenden Scharniere 14,14a ermöglichen das Ausschwenken der Tür 10 über 90° hinaus, ohne daß eine Kollisionsgefahr mit dem Rumpf oder bei Not-Exittüren mit den Flügeln gegeben ist.

## Patentansprüche

1. Öffnungsmechanik für eine druckbeaufschlagte Flugzeugtür, die aus einem geschlossenen Zustand durch Anheben in eine nach außen schwenkbare Position bringbar ist, dadurch gekennzeichnet, daß zum Anheben der Tür (10) zwei sie abstützende und um ihre Längsachse drehend gelagerte Anhebestangen (11,12) angeordnet sind, an deren rumpfseitigem, untenliegenden Ende auf einer Scharnierachse (13) je ein Scharnier (14) angeordnet ist, wobei diese Anhebestangen (11,12) über eine drehbare Anhebewelle (15) und Hebel (16) die Türanhebung durchführen und gleichzeitig durch die Drehbewegung dieser Anhebewelle (15) und einem Umlenkhebel (17) die Anhebestangen (11,12) um ihre Längsachse gedreht und damit die Scharniere (14) um 90° nach außen geschwenkt werden und die Türe (10) mittels der schwenkbaren Scharnierteile (14a) in eine Position von mehr als 90° nach unten bringbar ist.

## Claims

1. Opening mechanism for an aeroplane door to which pressure is applied, which door can be brought out of a closed state by lifting into a position where it can be pivoted outwards, characterised in that for lifting the door (10) two lifting bars (11, 12) are arranged which support the door and are mounted so as to be rotatable about the longitudinal axis thereof, a hinge (14) being disposed on a hinge pin (13) on the lower end of each lifting bar on the fuselage side, wherein these lifting bars (11, 12) carry out the lifting of the door by way of a rotatable lifting shaft (15) and lever (16) and simultaneously by the rotary movement of this lifting shaft (15) and a deflecting lever (17) the lifting bars (11, 12) are rotated about their longitudinal axis and thus the hinges (14) are pivoted outwards by 90° and the door (10) can be brought downwards by means of the pivotable hinge parts (14a) into a position of more than 90°.

## Revendications

1. Mécanisme d'ouverture pour une porte d'avion sollicitée en pression, qui est passée d'un état fermé, par soulèvement, dans une position susceptible de basculer à l'extérieur, caractérisé en ce que pour soulever la porte (10), se trouvent deux barres de soulèvement (11, 12) qui soutiennent la porte en étant montées à rotation autour de son axe longitudinal, et dont les extrémités inférieures, du côté du fuselage, sont montées sur un axe de charnière (13) dans chaque fois une charnière (14), et ces barres de soulèvement (11, 12) effectuent le soulèvement de la porte par l'intermédiaire d'un axe de soulèvement (15), rotatif, et d'un levier (16) et en même temps, par le mouvement de rotation de l'axe de soulèvement (15) et d'un levier de renvoi (17), les barres de soulèvement (11, 12) sont tournées sur leur axe longitudinal et ainsi les charnières (14) sont basculées de 90° vers l'extérieur et la porte (10) peut être conduite vers le bas par les parties pivotantes (14A) des charnières, dans une position à plus de 90°.
